Europäisches Patentamt

European Patent Office

Office européen des brevets

(11) Publication number: **0 201 220**
**A2**

# EUROPEAN PATENT APPLICATION

(21) Application number: 86302717.3

(22) Date of filing: **11.04.86**

(51) Int. Cl.⁴: **B 01 D 53/34**

(30) Priority: **02.05.85 GB 8511168**

(43) Date of publication of application: **12.11.86**
**Bulletin 86/46**

(84) Designated Contracting States: **AT BE DE FR GB IT NL SE**

(71) Applicant: **DAVY McKEE (LONDON) LIMITED, 250, Euston Road, London NW1 2PG (GB)**

(72) Inventor: **Nicholson, Norman Eric, 107 Fairfield Road, Stockton-on-Tees Cleveland TS19 7BS (GB)**
Inventor: **Scarlett, John, 2 Cleveland View Kirk Merrington, Spennymoor County Durham DL16 7JZ (GB)**

(74) Representative: **Eyles, Christopher Thomas et al, BATCHELLOR, KIRK & EYLES 2 Pear Tree Court Farringdon Road, London, EC1R 0DS (GB)**

(54) Process for selective dechlorination of waste gases.

(57) A process for selective dechlorination of a flue gas containing both HCl and $SO_2$ comprises washing the flue gas in a pretreatment zone with a circulating aqueous absorption liquor having a pH of from about 0.1 to about 2.2 and containing magnesium chloride dissolved therein, controlling the pH of the circulating liquor by controlled addition of a magnesium-containing pH controlling agent, and controlling the magnesium chloride content of the said circulating liquor by withdrawing from the circulation path of the aqueous absorption liquor a purge stream of magnesium chloride containing liquor. In a preferred procedure the magnesium chloride is present as a mixture of magnesium chloride and calcium chloride.

ACTORUM AG

0201220
TITLE MODIFIED
see front page

PROCESS

This invention relates to a process for selective dechlorination of waste gases containing hydrogen chloride and sulphur dioxide.

Since coal may contain up to about 2 wt% or more of sulphur compounds, the furnace flue gases from a coal-burning furnace may contain significant amounts of sulphur dioxide. In view of the increasing worldwide concern regarding the harmful effects on the environment of acidic gaseous pollutants, particularly sulphur dioxide, there is increasing pressure by way of legislation to control the emission of sulphur dioxide by power stations, other large coal-fired plants, petroleum refining operations and waste incineration. To this end, various processes have been developed for removal of sulphur dioxide from flue gases, including the Wellman-Lord $SO_2$ recovery process, the magnesium oxide-based $SO_2$ absorption processes, the dual alkali $SO_2$ absorption processes, and the limestone/lime-gypsum $SO_2$ absorption processes.

Further information regarding the Wellman-Lord $SO_2$ recovery process can be obtained from the publication "An Update of the Wellman-Lord Flue Gas Scrubbing Process", Institution of Chemical Engineers Symposium Series 72 (1982), and from US-A-3607037, US-A-3653812, US-A-3790660, GB-A-1557294 and GB-A-1557295. A description of the magnesium oxide-based $SO_2$ absorption processes will be found, for example, in Appendix G of "NATO-CCMS Flue Gas Desulphurization Pilot Study: Phase II - Applicability Study", prepared by R.L. Torstrick et al for United States Environmental Protection Agency, Washington, D.C. 20460, United States of America (May 1980). The dual alkali $SO_2$ absorption process is discussed in the Summary Report (EPA 625/8-80-004) "Sulfur Oxides Control Technology Series: Flue Gas Desulfurization - Dual Alkali Process" published by Industrial Environmental Research Laboratory, Research

- 2 -

0201220

Triangle Park NC 27711, United States of America (October 1980). An example of a publication describing the limestone/lime-gypsum $SO_2$ absorption process is GB-A-1505281.

Coal from some sources may contain, in addition to sulphurous impurities, a significant proportion of chlorine (e.g. up to about 1 wt% or more) which normally appears in the stack or furnace gases from a coal-burning furnace in the form of hydrogen chloride. In many $SO_2$ absorption processes HCl is a problem because, unless first removed from the flue gas, it can lead to increased corrosion in and inefficiency of the $SO_2$ absorption plant. Thus, for example, in a Wellman-Lord $SO_2$ recovery plant, it is usual to pretreat the flue gas using a water washing step which cools and saturates the gas, and removes the majority of the HCl present, prior to the $SO_2$ removal step, as well as scrubbing out most of the fly ash. HCl removal is particularly important when the coal being burnt has a chlorine content of at least about 0.1 wt%. When the coal has a low chlorine content, a water pre-washing step is an effective expedient, prior to $SO_2$ removal, and the quantity of acidic effluent produced can be minimised by recirculating the scrubbing water. However, when the coal has a high chlorine content, for example a coal containing at least about 0.4 wt% chlorine and 2 wt% sulphur, the flue gases may contain, for example, about 0.144 vol% $SO_2$ and about 0.029 vol% HCl, and water washing is uneconomical and creates a further disposal problem on account of the large volume of dilute hydrochloric acid that is produced.

Since the vapour pressure in equilibrium with an aqueous hydrochloric acid solution is dependent on the HCl concentration in the solution, there is an upper limit to the concentration of HCl in the recirculating scrubbing liquor that can be tolerated in order to achieve the

desired degree of HCl removal. In practice, about 1 wt% HCl solution is as strong an acid as can be tolerated for use in the washing pre-treatment step of a Wellman-Lord $SO_2$ recovery plant. Thus, if water washing were used, for example, for HCl removal prior to $SO_2$ recovery by the Wellman-Lord process from a flue gas from a 2000 MW power station burning a high chlorine content coal (e.g. a coal containing about 0.4 wt% chlorine), there would be generated approximately 2,000,000 U.S. gallons/day (7.5 million litres/day) of 1 wt% HCl solution, the disposal of which would represent a considerable problem to the power station operator since it cannot simply be discharged to the environment and is too dilute to be generally useful.

In EP-A-0046387 there is proposed a process for the selective removal of hydrogen halide from a gas containing the same comprising intimately contacting the gas with an aqueous liquor containing a water soluble halide, such as an alkali metal or an alkaline earth metal halide, dissolved therein whose pH lies in the range from about 0.1 to about 3.0. Amongst water soluble halides that can be used in the process of EP-A-0046387 there are mentioned calcium chloride, calcium bromide and calcium iodide. The pH is said to lie preferably in the range of from about 0.1 to about 2.5, for example in the range of from about 1.5 to about 2.0. For selective removal of HCl from a gas containing, for example, a mixture of $SO_2$ and HCl, there is recommended use of an aqueous liquor containing from about 3 wt% to about 70 wt% of calcium chloride. Control of the pH in this case can be achieved by adding lime to the circulating liquor. There results a calcium chloride solution, with a typical concentration of about 30 wt%, which can be evaporated to about 70 wt% calcium chloride and converted to calcium chloride flake.

A further description of this process will be found in a paper entitled "Selective Absorption of Hydrogen Chloride from Flue Gases in the Presence of Sulfur Dioxide" by W.S. Kyte et al, Environmental Progress, Vol. 3, No. 3, pages 183 to 187 (August 1984).

DE-A-2808364 teaches use of a circulating liquor whose pH is controlled between 0.5 and 2.5 and contains, in addition to chloride ions, also calcium ions and carbonic acid ($CO_2$). According to this proposal HCl is selectively removed from the flue gas without simultaneously removing $SO_2$. Salt concentrations up to about 30% can be achieved.

GB-A-1560038 proposes removal of chloride ions from flue gas containing $SO_2$ by simultaneous absorption of both $SO_2$ and the chlorine-containing impurities onto solid magnesium oxide in the form of a circulating slurry, followed by separation of the solids, calcining to release $SO_2$ and HCl, water washing of the gases released to remove HCl, and treatment of the remaining gases to recover S or $H_2SO_4$ therefrom.

In the processes of EP-A-0046387 and DE-A-2808364, a problem may arise due to a formation of encrustations on the walls of the plant and blockage of valves and spray nozzles. Such encrustations can be extremely difficult to remove once formed.

In addition, although the processes of EP-A-0046387 and of DE-A-2808364 obviate the production of large volumes of useless dilute hydrochloric acid solutions from flue gas desulphurisation plants, the byproduct from such processes, i.e. more or less concentrated solutions of calcium chloride or calcium chloride flake, have limited usefulness and may represent a disposal problem for the operator of a coal-fired power station. The only way of disposing of such concentrated solutions of calcium chloride or crystalline solid calcium chloride may be dumping on land or at sea, either of which expedients constitutes an additional expense and possibly an additional environmental problem for the power station operator.

There is accordingly a need to provide an improved process for selective dechlorination of HCl- and $SO_2$-containing flue gases which will avoid the problem of formation of encrustations in the HCl removal pre-treatment section of the plant. There is also a need to provide an improved process for removal of HCl and $SO_2$ from flue gases which will result in more useful by-products.

The invention accordingly seeks to provide an improved process for selective dechlorination of HCl- and $SO_2$-containing flue gases which yields commercially desirable by-products and which is free from the risk of encrustation in the HCl removal pre-treatment section.

According to the present invention there is provided a process for selective dechlorination of a flue gas containing both HCl and $SO_2$ which comprises washing the flue gas in a pre-treatment zone with a circulating aqueous absorption liquor having a pH of from about 0.1 to about 2.2 and containing magnesium chloride dissolved therein, controlling the pH of the circulating liquor by controlled addition of a magnesium-containing pH control agent, and controlling the magnesium chloride content of the said circulating liquor by withdrawing from the circulation path of the aqueous absorption liquor a purge stream of magnesium chloride containing liquor.

The treated flue gas from the pre-treatment zone can then be subjected to a desulphurisation step. using a conventional desulphurisation process, such as the Wellman-Lord $SO_2$ recovery process, or one of the magnesium oxide-based $SO_2$ absorption processes, the dual alkali $SO_2$ absorption processes, or the limestone/lime-gypsum $SO_2$ absorption processes.

Preferably the pH of the circulating liquor lies in the range of from about 1.0 to about 1.5.

The invention contemplates use of a circulating absorption liquor containing magnesium chloride as the sole essential solute and in which the pH control agent is selected from magnesium oxide, magnesium hydroxide, magnesium carbonate, and mixtures of two or more thereof. In the circulating liquor the concentration of magnesium chloride is preferably from about 1 wt% up to about 40 wt%, and more preferably lies in the range of from about 10 wt% to about 35 wt%.

The invention further envisages use of a circulating absorption liquor containing both magnesium chloride and calcium chloride. Thus according to another aspect of the present invention there is provided a process for selective dechlorination of a flue gas containing both HCl and $SO_2$ which comprises washing the flue gas in a pre-treatment zone with a circulating aqueous absorption liquor having a pH of from about 0.1 to about 2.2 and containing a mixture of magnesium chloride and calcium chloride dissolved therein and having a predetermined magnesium:calcium molar ratio, controlling the pH of the circulating liquor by controlled addition of a pH control agent thereto, which pH control agent contains both magnesium and calcium in said predetermined magnesium:calcium molar ratio, and controlling the content of magnesium chloride and of calcium chloride in the circulating liquor by withdrawing from the circulation path of the aqueous absorption liquor a purge stream of said liquor. The pH of the circulating liquor in this case preferably lies in the range of from about 0.8 to about 2.0. In such a process the pH control agent may comprise a mixture of at least one magnesium-containing material selected from magnesium oxide, magnesium hydroxide and magnesium carbonate and at least one calcium-containing material selected from calcium oxide, calcium hydroxide and calcium carbonate. In such a process the predetermined magnesium:calcium molar ratio may range from about 1:10 to about 10:1, but is preferably in the range of from about 2:1 to about 1:2 and even more preferably is about 1:1. Hence there can be used as the pH control agent in such a process any of a wide variety of naturally occurring dolomites which contain both magnesium carbonate and calcium carbonate in varying ratios, but typically in a 1:1 molar ratio. Alternatively a natural dolomite could be used in the calcined state.

The concentration of the mixture of magnesium and calcium chlorides may vary within wide limits, e.g. from about 1 wt% up to about 50 wt%. Preferably it is in the range of from about 10 wt% to about 35 wt%.

When the circulating absorption liquor contains magnesium chloride alone, there can be contemplated for use as the magnesium-containing pH control agent natural magnesite ($MgCO_3$), natural brucite ($Mg(OH)_2$) or one of the calcined forms of one of these materials.

Absorption is conveniently effected at a temperature in the range of from about 40°C to about 95°C.

The resulting purge solution is rich in magnesium and is a useful feed material for magnesium production processes and thus does not pose a disposal problem for the operator of a coal-fired power station. The presence of calcium ions in the purge solution is no disadvantage for this end use. Moreover, as the purge solution has a commercial value and is not an unwanted byproduct, its disposal does not add to the operating costs of the power station; indeed the cost of flue gas desulphurisation can be offset, at least to some extent, by sale of the purge solution to a magnesium producer.

It is a further advantage of the present invention that no encrustations are formed in the pre-treatment zone where HCl removal is effected. Such

0201220

encrustations can arise in the operation of plants using the processes of EP-A-0046387 and of DE-A-2808364 and are caused, it is believed by the applicants, by precipitation of calcium sulphate (gypsum) as a result of formation of sulphate ions in the absorption solution, either by absorption of traces of sulphur trioxide from the flue gas or by oxidation of sulphite or bisulphite ions. When the circulating absorption liquor contains magnesium chloride alone there is no calcium present to form gypsum and, as magnesium sulphate is very soluble, there is no danger of encrustations being formed. When the circulating absorption liquor contains both magnesium chloride and calcium chloride, the solubility of sulphate is enhanced, due to the solubility of magnesium sulphate, and hence the problem of gypsum deposition is substantially avoided or minimised.

Magnesium can be produced from sea water, which contains approximately 1200 ppm of magnesium io: 3 by precipitation of magnesium hydroxide with lime, or better with calcined dolomite (or dolime), followed by calcining to yield magnesium oxide, which is then converted to the chloride; the resulting magnesium chloride is then subjected to electrolysis in the molten state in anhydrous or hydrous form.

Such processes are known as the Dow Chemical Seawater Process and as the Norsk Hydro process, further details of which can be found, for example on page 577 et seq. of Volume 14 of Kirk-Othmer's "Encyclopaedia of Chemical Technology" (Third Edition).

The purge solution from the process of the invention can, as already mentioned, be used as a feed solution for magnesium production in place of sea water. Compared with the conventional sea water processes, the use of the purge solution of the present invention as feed solution has the great advantage for the magnesium producer that the magnesium chloride content is much higher, typically lying in the range of from about 10 wt% to about 30 wt%, than in sea water.

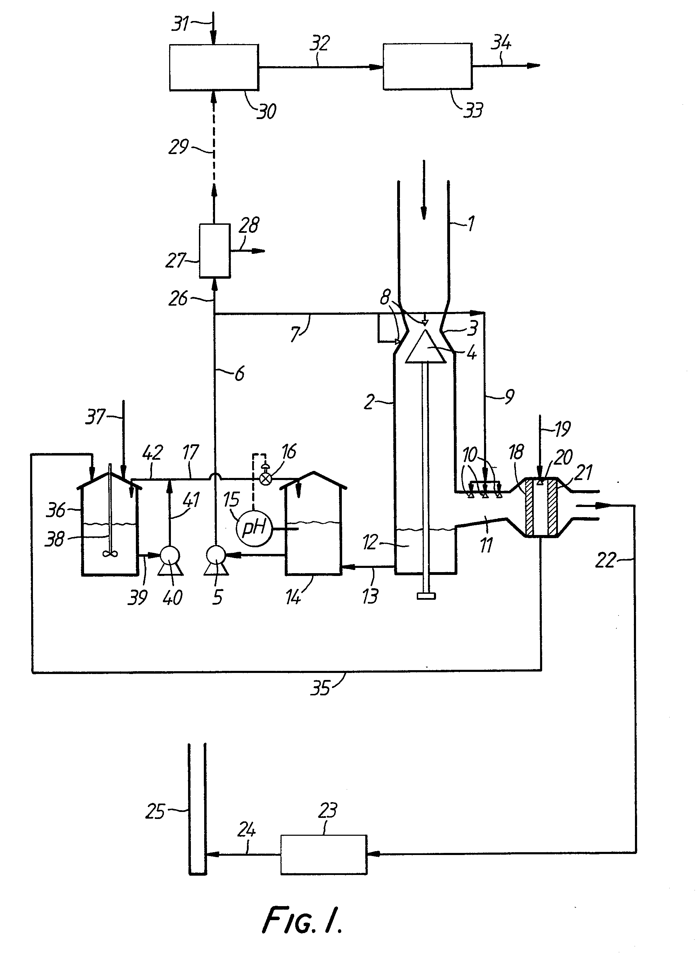

In order that the invention may be clearly understood and readily carried into effect, a preferred form of flue gas desulphurisation plant with a pre-scrubber section designed to operate using a selective dechlorination process according to the invention will now be described, by way of example only, with reference to Figure 1 of the accompanying drawings, which is a flow diagram of the plant.

Referring to Figure 1 of the drawings, a dirty flue gas from a power station boiler furnace is fed by way of duct 1 to a pre-scrubber 2. Adjacent to its inlet is a venturi section 3 which is fitted with an adjustable cone 4 for adjustment of the throat gap. An aqueous chloride liquor is pumped by means of pump 5 through lines 6 and 7 to nozzles 8 through which it is sprayed into the throat of venturi section 3. Additional chloride liquor is passed by way of line 9 to further nozzles 10 mounted in the exit section from pre-scrubber 2. Liquor from nozzles 8 and 10 collects in the bottom of pre-scrubber 2 to form a pool 12 and is withdrawn therefrom through line 13 to a storage tank 14. The pH of the liquor is monitored by means of pH meter 15 which is arranged to control a valve 16 in line 17.

The flue gas gives up its HCl content to the liquor in passage through pre-scrubber 2 and its exit section 11 and is also cooled to a temperature of about 60°C in so doing. Fly ash is also removed from the flue gas in passage through pre-scrubber 2 and its exit section 11. The gas is then passed through a first demister 18, is washed with make-up water supplied from line 19 to nozzles 20, and then passes through a second demister 21 into the clean flue gas main 22 to a conventional Wellman-

Lord $SO_2$ recovery plant 23. The desulphurised flue gas is vented to atmosphere by way of line 24 and stack 25.

The liquor circulated by pump 5 is a 20 wt% aqueous solution of an equimolar mixture of magnesium chloride and calcium chloride having a pH of 1.5. It also contains fly ash particles suspended therein. It may further contain traces of sulphate ions.

A purge stream is withdrawn from the liquor circulation loop by means of line 26 and is passed through filter 27 to remove fly ash which is discarded as shown by line 28. The resulting ash-free liquor is taken by pipe line or by tanker, as indicated by line 29 to the first stage 30 of a magnesium recovery plant in which it is treated by addition of calcined dolomite, supplied in line 31. The resulting precipitated magnesium hydroxide is then taken as indicated by line 32, and calcined and converted to anhydrous magnesium chloride and electrolysed by conventional procedures in the further processing stages 33 of the magnesium production plant to yield magnesium as indicated by line 34.

The wash water supplied by nozzles 20 is collected in line 35 and passed to tank 36 to which crushed dolomite is supplied as indicated by line 37. Reference numeral 38 indicates a stirrer fitted in tank 36 for the purpose of producing a dolomite slurry. Slurry can be withdrawn from tank 36 in line 39 by means of pump 40 and pumped through lines 41 and 42 back into tank 36; line 17 forms a branch from the slurry circulation loop.

In operation of the plant pH meter 15 monitors continuously the pH of the liquor circulated by pump 5 and controls valve 16 to admit dolomite slurry by way of line 17 in order to maintain the pH of the absorption liquor supplied by way of nozzles 8 at a preselected value, e.g. 1.5. Purge solution is withdrawn in line 26 at a corresponding rate, thereby maintaining the concentration of calcium chloride and magnesium chloride in the circulating liquor at the preselected value, i.e. 20 wt% of the mixture of magnesium chloride and calcium chloride.

More than 99% of the HCl in the flue gas supplied in duct 1 is removed in passage through pre-scrubber 2 and its exit section 11.

In the above description of the illustrated plant the circulating absorption liquor is recommended to contain a mixture of magnesium chloride and calcium chloride. It is also within the purview of the present invention to use a circulating liquor containing magnesium chloride alone. In this case crushed magnesite or crushed brucite can be used in place of the crushed dolomite.

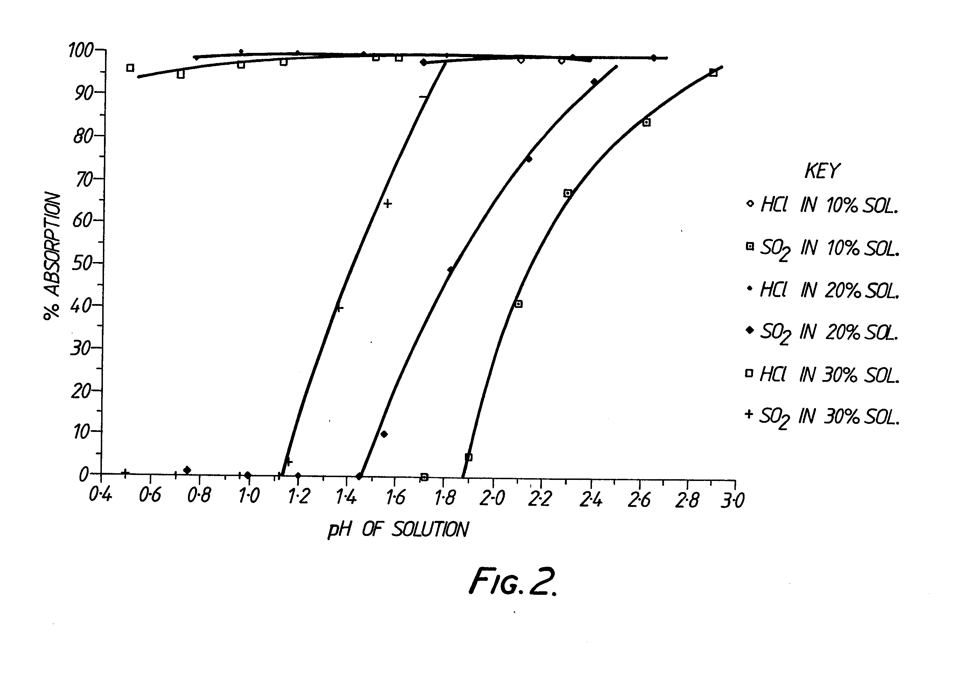

Figure 2 illustrates the selective absorption of HCl from a gas containing a mixture of HCl and $SO_2$ into an aqueous liquor containing differing concentrations (in wt%) of an equimolar mixture of $CaCl_2$ and $MgCl_2$ at different pH values.

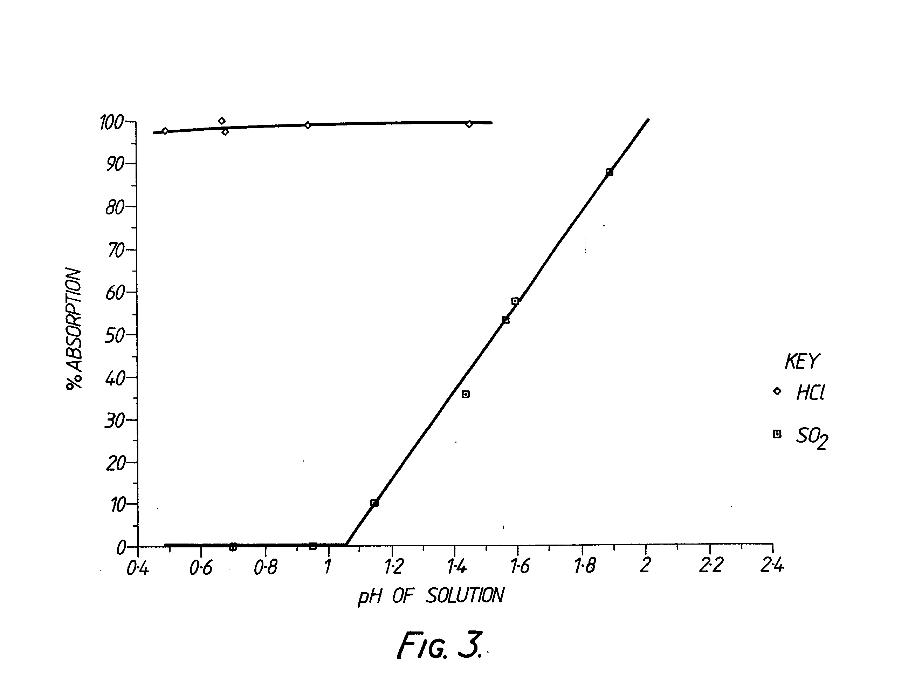

Figure 3 is a similar graph illustrating selective absorption of HCl from a gas containing both HCl and $SO_2$ into an aqueous liquor containing 30 wt% $MgCl_2$ at different pH values.

- 12 -

0201220

CLAIMS:

1.      A process for selective dechlorination of a flue gas containing both HCl and $SO_2$ which comprises washing the flue gas in a pre-treatment zone with a circulating aqueous absorption liquor having a pH of from about 0.1 to about 2.2, preferably in the range of from about 1.0 to about 1.5, and containing magnesium chloride dissolved therein, controlling the pH of the circulating liquor by controlled addition of a magnesium-containing pH control agent, and controlling the magnesium chloride content of the said circulating liquor by withdrawing from the circulation path of the aqueous absorption liquor a purge stream of magnesium chloride containing liquor.

2.      A process according to claim 1, in which the pH control agent is selected from magnesium oxide, magnesium hydroxide, magnesium carbonate, and mixtures of two or more thereof.

3.      A process according claim 1 or claim 2, in which the concentration of magnesium chloride in the circulating absorption liquor is from about 10 wt% to about 35 wt%.

4.      A process for selective dechlorination of a flue gas containing both HCl and $SO_2$ which comprises washing the flue gas in a pre-treatment zone with a circulating aqueous absorption liquor having a pH of from about 0.1 to about 2.2, preferably in the range of from about 0.8 to about 2.0, and containing a mixture of magnesium chloride and calcium chloride dissolved therein and having a predetermined magnesium:calcium molar ratio, controlling the pH of the circulating liquor by controlled addition of a pH control agent thereto, which pH control agent contains both magnesium and calcium in said predetermined

0201220

magnesium:calcium molar ratio, and controlling the content of magnesium chloride and of calcium chloride in the circulating liquor by withdrawing from the circulation path of the aqueous absorption liquor a purge stream of said liquor.

5. A process according to claim 4, in which the pH control agent is a mixture of at least one magnesium-containing material selected from magnesium oxide, magnesium hydroxide and magnesium carbonate and at least one calcium-containing material selected from calcium oxide, calcium hydroxide and calcium carbonate.

6. A process according to claim 4 or claim 5, in which the preselected magnesium:calcium molar ratio is from about 1:2 to about 2:1.

7. A process according to any one of claims 4 to 6, in which the pH control agent is selected from dolomite and calcined dolomite.

8. A process according to any one of claims 4 to 7, in which the concentration of the mixture of magnesium chloride and calcium chloride is in the range of from about 10 wt% to about 35 wt%.

9. A process according to any one of claims 1 to 8, in which the temperature of the absorption liquor in the absorption step lies in the range of from about 40°C to about 95°C.

10. A process according to any one of claims 1 to 9, in which the treated flue gas is subsequently subjected to desulphurisation.

- 14 -     0201220

11.     A process for the production of magnesium which includes the step of adding calcined dolomite to a liquor withdrawn as a purge stream in a process according to any one of claims 1 to 10.

*Fig. 1.*

FIG. 2.

KEY
- ◇ HCl IN 10% SOL.
- ▣ SO₂ IN 10% SOL.
- • HCl IN 20% SOL.
- ◆ SO₂ IN 20% SOL.
- □ HCl IN 30% SOL.
- + SO₂ IN 30% SOL.

2/3

0201220

FIG. 3.